# EUROPÄISCHE PATENTSCHRIFT

(11) **EP 0 763 460 B1**
(45) Veröffentlichungstag und Bekanntmachung des Hinweises auf die Patenterteilung: **24.04.2002**
(21) Anmeldenummer: 96250117.7
(22) Anmeldetag: 25.06.1996
(51) Int. Cl.: B62J 9/00, B62K 7/04, B62K 3/06, B62J 7/06, B62H 1/12

(54) **Lastenfahrrad mit Vorderradgepäckträger**
Transport bicycle with front luggage carrier
Bicyclette de transport avec porte-bagages avant

(30) Priorität: 15.09.1995 DE 19534270
(43) Veröffentlichungstag der Anmeldung: 19.03.1997
(73) Patentinhaber: Sachsen-Zweirad-GmbH, 01904 Neukirch (DE)
(72) Erfinder: Müller, Eberhard, 01844 Neustadt (DE); Schikora, Karl Heinz, 01904 Neukirch (DE); Reichelt, Heiko, 01904 Steinigtwolmsdorf (DE); Nehrig, Uwe, 02625 Bautzen (DE)
(74) Vertreter: Mühlisch, Alfred, Dipl.-Ing.

(56) Entgegenhaltungen:
- BE-A- 389 777
- DE-A- 3 138 789
- DE-A- 3 832 255
- DE-A- 4 313 763
- DE-U- 8 536 723
- US-A- 2 629 611

## Beschreibung

Die Erfindung betrifft ein Lastenfahrrad, insbesondere für den Postzustelldienst, mit einen Fahrradrahmen aus Rohren aus Metall oder aus faserverstärkten Kunststoffen, mit einem Vorderradgepäckträger und Stützräder tragenden Fahrradstützen.

Aus dem Deutschen Geschmacksmustern M 95 02 120 ist ein Rahmen für ein Lastenfahrrad mit einem verstärkten Hauptrohr als Verbindung zwischen dem unteren Ende des Steuerkopfs und dem Sattelstützrohr am Tretlager bekannt. Durch Dreiecksverstrebungen über dem Hauptrohr, die in der Mitte des Hauptrohres angreifen und nach vorn zum oberen Ende des Steuerkopfes und nach hinten zum Ende eines Gepäckträgers geführt sind, wird die Konstruktion versteift. Das Hinterrad ist mit seiner am Sattelstützrohr am Tretlager und in der Mitte des Sattelstützrohres befestigt. Diese Konstruktion erlaubt einen niedrigen Einstiegsbereich auf Kosten der Rahmenstabilität. Wenn Lasten an verschiedenen Stellen des Rades angebracht werden, entsteht ein schwingungskritisches Mehrmassensystem, und es ergeben sich bei dieser Dreieckskonstruktion kritische Spannungen und Verformungen. Weiter sind aus den Geschmacksmustem M 94 05 817 "Transportfahrräder mit Transportzubehör"; M 94 06 759 "Fahrrad"; M 94 02 015 "Fahrradrahmen"; M 90 00 973 "Militärfahrrad" Lastenfahrräder mit am Steuerkopfrohr befestigten Vorderradgepäckträger bekannt. Alle diese Muster zeigen jedoch Fahrräder, deren Vorderradgepäckträger frei am Steuerkopfrohr befestigt ist. Eine Abstützung mit Fahrradstützen wird nicht dargestellt.

Aus der DE-OS 33 07 664 "Vorderradgepäckträger ..." ist es bekannt, den als Korb geformten Gepäckträger vor dem Steuerkopfrohr an diesem und damit am Fahrradrahmen zu befestigen, so daß das Vorderrad frei beweglich lenkbar ist. Auch im Gebrauchsmuster GM 93 17 840 "Gepäckträger ..." ist ein Lastenfahrrad beschrieben, das sowohl über dem Vorderrad wie auch über dem Hinterrad einen Gepäckträger trägt. Der Vorderradgepäckträger stützt sich auf der Vorderradgabel ab und wird beim Lenken mit bewegt. Gerade bei schwerer Belastung des Vorderradgepäckträgers wird hier die Beweglichkeit des Fahrrades stark beeinträchtigt.

Allgemein bekannt sind auch ausklappbare Fahrradständer, die meist in Nähe des Tretlagers am Fahrradrahmen befestigt sind und mit dem Fuß gegen eine Feder unter anheben des Fahrrades heruntergeklappt werden, so daß das Fahrrad darauf abgestellt wird. Unabhängig davon sind Stützen für Fahrräder bekannt, die Stützräder tragen. Diese Stützen sind in der Nähe des Tretlagers abnehmbar befestigt (DE-OS 37 28 017 ) oder können wie der allgemein bekannte Ständer geklappt werden (DE-OS 38 32 255). Diese Stützen dienen zum Aufrechthalten des Fahrzeugs bzw. als Hilfe zum Ausbalancieren des Fahrzeugs.
Weiterhin ist ein "Zusatzgerät für ein Fahrrad" aus DE-OS 31 38 789 bekannt, bei dem ein als Einkaufswagen abkoppelbarer zweirädriger Karren an der oberen Hinterradgabel eines Fahrrades , über das Hinterrad greifend, ankoppelbar ist. Angekoppelt dient dieser Karren als Stütze und Gepäckträger für das Fahrrad. Jedoch laufen hier die Stützräder ständig mit, was hinderlich beim Kurvenfahren und auf längeren Wegstrecken ist.

Zweck und Aufgabe der Erfindung ist es, ein Lastenfahrrad mit einem Fahrradrahmen aus Rohren aus Metall oder aus faserverstärkten Kunststoffen zu finden, der einen niedrigen Einstieg in das Lastenfahrrad bei hoher Steifigkeiten und Festigkeiten des Fahrradrahmens sicherstellt und erhebliche Lastspitzen an der Gabel und Steifigkeitssprünge mit neuen Lastspitzen vermeidet, einen Vorderradgepäckträger und Stützräder tragenden Fahrradstützen hat, das unbehindert gefahren, das auf kurzen Strecken leicht geschoben und das verkehrssicher und gegen unbeabsichtigtes Wegrollen gesichert abgestellt werden kann.

Die Lösung der Aufgabe ist Gegenstand der im kennzeichnenden Teil des ersten Anspruchs offenbarten Erfindung. Weitere zweckmäßige Ausgestaltungen der Erfindung sind Gegenstand der weiteren Unteransprüche.

Der Rahmen besteht demnach aus einem V-förmigen Hauptrohr mit breit gezogener Grundlinie, das von der Unterseite des Steuerkopfrohres bis zu einer Sattelstützenaufnahme geführt ist, wobei die tiefste Stelle bis zur Höhe des unteren Tretkurbeltotpunktes führen kann, ohne dabei Bodenfreiheit aufzugeben. Eine Führung bis in etwa zur Höhe des Tretlagers ist jedoch ebenfalls möglich. Die V-Kontur des Hauptrohres ist durch ein unteres Stützrohr ausgesteift, das im wesentlichen in horizontaler Richtung geführt und am Hauptrohr an zwei Punkten verschweißt, verlötet oder vermufft ist. Der Abstand des Stützrohres von dem Grundlinienbereich des Hauptrohrs ist so gewählt, daß eine akzeptable Durchstiegshöhe beim Aufsteigen auf das Rad nicht überschritten wird. Ein weiteres, oberes Stützrohr führt vom Steuerkopf zum unteren Stützrohr und ist an den Enden ebenfalls verschweißt, verlötet oder vermufft. Das Tretlagergehäuse kann am Hauptrohr angeschweißt sein, wobei je nach zulässiger Maximallast eine Auslegung mit Stegblechen als Verstärkung oder ohne solche möglich ist. In einer anderen Ausführung kann das Hauptrohr auch unterbrochen sein und als Unterrohr einerseits und als Sitzrohr andererseits im Tretlagergehäuse münden. Durch zusätzliche sich gegeneinander abstützende Rohre oder Profile entsteht so aus vier Rohren inklusive Steuerrohr ein Rahmenverbund mit optimalem Spannungsverlauf.
Der Hinterbau, der aus eine Hinterradgabel zwischen sich bildenden, an den Ausfall-Enden zusammenlaufenden Hinterbaustreben besteht, mündet an zwei Stellen aufjeder Seite im Hauptrohr unterhalb der Sattelstütze, wobei die untere Hinterbaustrebe auch im Tretlagergehäuse münden kann. Für eine Auslegung auf besonders hohe Belastung ist eine dritte Hinterbaustrebe aufjeder Seite vorgesehen, die in der Nähe der Ausfall-Enden einerseits und in der Nähe des Knotens zwischen Stützrohr und Hauptrohr andererseits mündet. Um die Lastspitzen am Steuerrohr aufzufangen, hat das Schaftrohr der vorderen Gabel eine im wesentlichen zylindrische Außenkontur und eine Wandstärke , die an der unteren Mündung an der Gabel maximal ist, und von dort stetig und ohne Steifigkeitssprünge von unten nach oben hin abnimmt.

Der Vorderradgepäckträger ist am Steuerkopfrohr des Fahrradrahmens über dem Vorderrad befestigt. Er zwei trägt Fahrradstützen, die sich über jeweils ein in ihrem unteren Teil befindliches Scharniergelenk mit einer Rastung bis fast zum Boden zu einer an ihren Enden Stützräder tragenden Querachse erstrecken. Über die Scharniergelenke ist eine Feder gelegt, die nach Lösen der Rastung die Querachse mit den Rädern vom Boden abhebend zwischen den Fahrradrahmen und das Vorderrad zieht. Weiterhin ist eine durch Umschalten in zwei Stellungen wirkende Feststellbremse außerhalb des normalen Griffbereichs des Fahrradfahrers am Lenker des Lastenfahrrads angebracht. Diese drückt mit ihren Bremsbacken auf die Seitenwänden des Vorderradreifens und erzeugt die Bremswirkung.

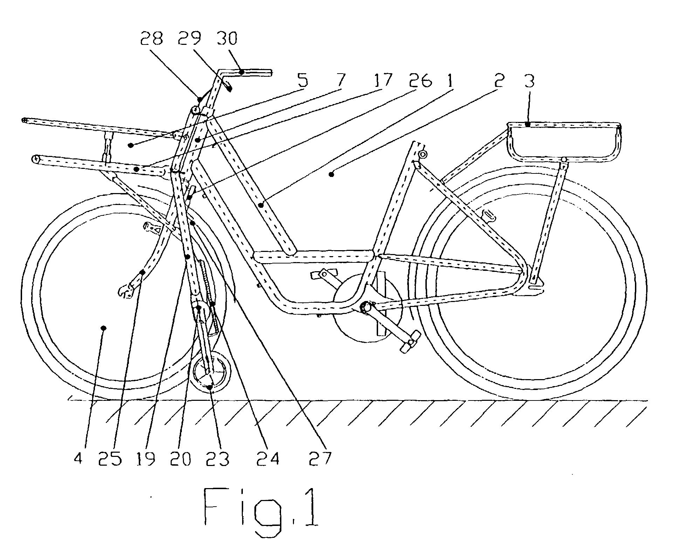

Die Erfindung soll nachstehend an Hand eines Ausführungsbeispiels näher erläutert werden. Die dazugehörige Zeichnung zeigt in
- Fig. 1: ein schematisches Lastenfahrrad in Seitenansicht,

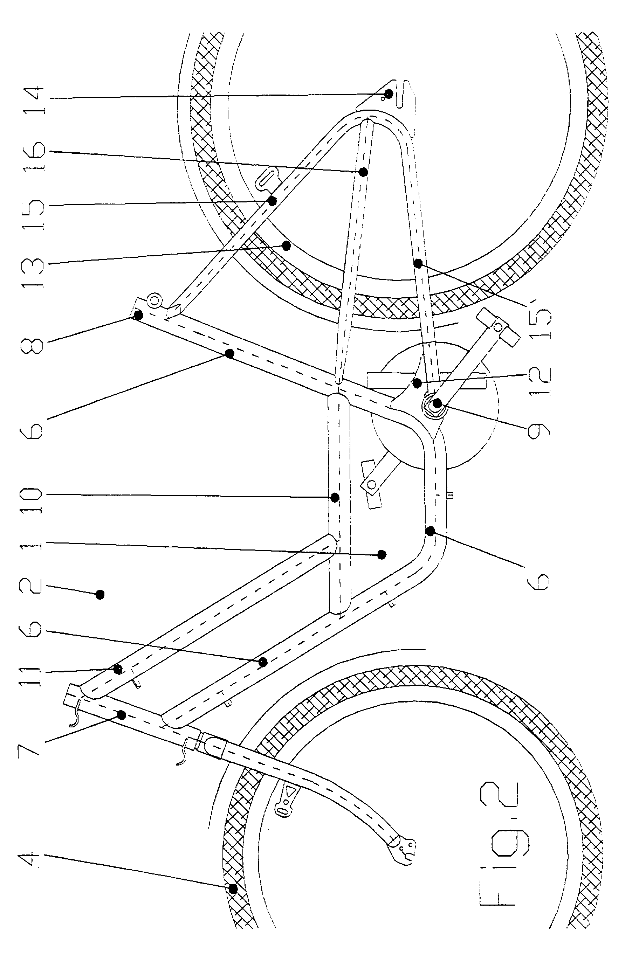

- Fig. 2: einen Fahrradrahmen für Lastenfahrräder

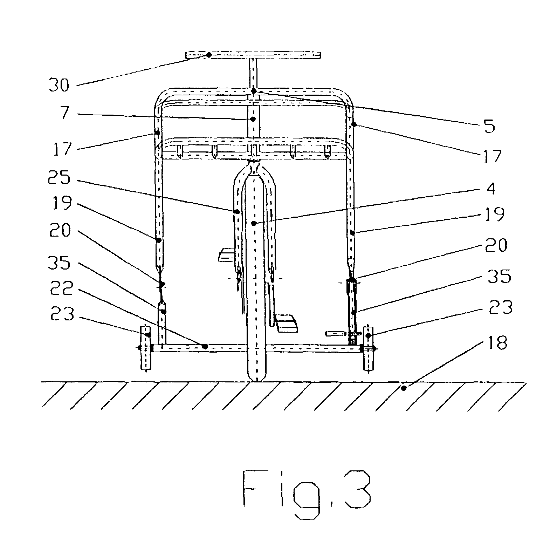

- Fig. 3: eine schematische Vorderansicht des Lastenfahrrades,

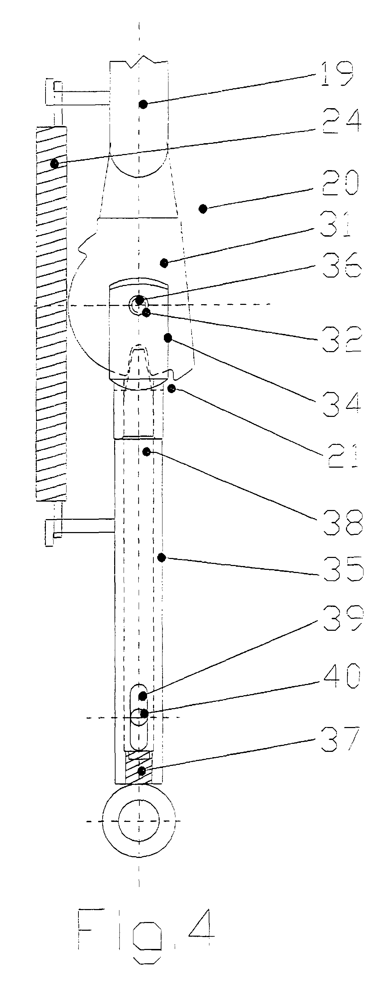

- Fig. 4: einen Schnitt durch das Scharniergelenk mit der Rastung.

Ein Fahrradrahmen 1 eines Lastenfahrrades 2 trägt einen Hinterradgepäckträger 3 und über einem Vorderrad 4 einen Vorderradgepäckträger 5.

Der Fahrradrahmen 1 besteht aus einem V-förmigen Hauptrohr 6 mit breit gezogener, etwa waagerecht verlaufender Grundlinie , das von der Unterseite eines Steuerkopfrohres 7 bis zu einer Sattelstützenaufnahme 8 geführt ist. An der hinteren Biegung des Hauptrohres 6 ist ein Tretlagergehäuse 9 befestigt. Über der waagerecht verlaufenden Grundlinie des Hauptrohres 6 ist ein unteres Stützrohr 10 im wesentlichen in horizontaler Richtung geführt und am Hauptrohr 6 an zwei Punkten befestigt. Der Abstand des Stützrohres 10 von dem Grundlinienbereich des Hauptrohrs 6 ist so gewählt, daß eine akzeptable Durchstiegshöhe beim Aufsteigen auf das Rad nicht überschritten wird. Ein oberes Stützrohr 11 führt vom Steuerkopfrohr 7 zum unteren Stützrohr 10 und ist an den Enden ebenfalls befestigt. Beim Tretlagergehäuse 9 sind am Hauptrohr 6 je nach zulässiger Maximallast Stegblechen 12 als Verstärkung vorgesehen.

Der Hinterbau 13, der aus eine Hinterradgabel zwischen sich bildenden, an den Ausfall-Enden 14 zusammenlaufenden Hinterbaustreben 15 besteht, mündet an zwei Stellen im Hauptrohr 6 unterhalb der Sattelstützenaufnahme 8, wobei die untere Hinterbaustrebe 15' auch im Tretlagergehäuse 9 münden kann. Für eine Auslegung auf besonders hohe Belastung ist eine dritte Hinterbaustrebe 16 aufjeder Seite vorgesehen, die in der Nähe der Ausfall-Enden 14 einerseits und in der Nähe des Knotens zwischen unterem Stützrohr 10 und Hauptrohr 6 andererseits mündet.
Der Vorderradgepäckträger 5 ist am Steuerkopfrohr 7 des Fahrradrahmens 1 befestigt. An seiner rechten und linken Seitenwand 17 trägt der Vorderradgepäckträger 5 eine sich zum Boden 18 erstreckende Fahrradstütze 19. In gleicher Höhe über dem Boden 18 befindet sich in jeder Fahrradstütze 19 ein Scharniergelenk 20 mit einer Rastung 21. Die Fahrradstützen 19 sind miteinander an ihrem unteren Ende durch eine Querachse 22 verbunden. Die Querachse 22 trägt an Ihren Enden Stützräder 23. Ein Scharniergelenk 20 ist mit einer Feder 24 überspannt. Durch die Rastung 21 wird ein ungewolltes Einknicken der Fahrradstützen 19 nach Herunterklappen der Stützräder 23 verhindert. Unterhalb des Vorderradgepäckträgers 5 ist an einer Vorderradgabel 25 als Feststellbremse eine Zangenbremse 26 befestigt. Die Bremsbacken 27 der Zangenbremse 26 arbeiten mit dem Reifen auf dem Vorderrad 4 zusammen. Ein Seilzug 28 führt zu einem Hebel 29 in der Mitte eines Lenkers 30, durch den die Zangenbremse 26 betätigt wird. Die Fahrradstütze 19 endet in einer halbkreisförmigen Lasche 31 mit einer Bohrung 32. Am Scheitel des Halbkreises ist eine Aussparung 33 in der Lasche 31. Die Lasche 31 greift in einen in Längsrichtung verlaufenden Schlitz 34 in einem Unterrohr 35 ein. Das Unterrohr 35 ist mit einer Achse 36, die durch die Bohrung 32 der Lasche 31 das Scharniergelenk 20 bildend hindurch greift, mit der Fahrradstütze 19 verbunden. Im Unterrohr 35 befindet sich ein auf einer Druckfeder 37 gelagerter Bolzen 38. Durch die Druckfeder 37 wird der Bolzen 38 gegen die Lasche 31 gedrückt und rastet in der Aussparung 33 ein, sobald das Unterrohr 35 mit der Fahrradstütze fluchtet. Im Unterrohr 35 befindet sich über der Querachse 22 ein Langloch 39, durch das ein über der Querachse 22 stehender Hebel 40 in den Bolzen 38 eingreift. Durch Betätigen des Hebels 40 wird der Bolzen 38 aus der Aussparung 33 gezogen und die Rastung 21 aufgehoben.

Zum Fahren auf dem Lastenfahrrades 2 sind die Fahrradstützen 19 eingeknickt. Die Feder 24 hält die Stützräder 23 vom Boden 18 abgehoben. Soll das Lastenfahrrades 2 abgestellt werden, so werden durch Treten auf die Querachse 22 die Stützräder 23 herunter auf den Boden 18 gedrückt, die Feder 24 gespannt und die Fahrradstützen 19 durch Einrasten der Rastung 21 versteift. Durch Umlegen des Hebels 29 wird die Zangenbremse 26 angezogen. Die Bremsbacken 27 drücken dabei seitlich den Reifen auf dem Vorderrad 4 ein und halten damit das Lastenfahrrad 2 sicher im Stand. Soll das Lastenfahrrad 2 über ein kurze Strecke geschoben werden, wird die Zangenbremse 26 durch Zurücklegen des Hebels 29 gelöst. Nunmehr kann das Lastenfahrrad 2 auf den Stützrädern 23 geschoben werden. Durch Treten auf den Hebel 40 wird die Rastung 21 gelöst und die Feder 24 schwenkt die Stützräder 23 in die Ausgangsstellung zurück.

### Aufstellung der verwendeten Bezugszeichen

- 1: Fahrradrahmen
- 2: Lastenfahrrad
- 3: Hinterradgepäckträger
- 4: Vorderrad
- 5: Vorderradgepäckträger
- 6: Hauptrohr
- 7: Steuerkopfrohr
- 8: Sattelstützenaufnahme
- 9: Tretlagergehäuse
- 10: Stützrohr
- 11: Stützrohr
- 12: Stegblechen
- 13: Hinterbau
- 14: Ausfall-Ende
- 15: Hinterbaustrebe
- 16: Hinterbaustrebe
- 17: Seitenwand
- 18: Boden
- 19: Fahrradstütze
- 20: Scharniergelenk
- 21: Rastung
- 22: Querachse
- 23: Stützrad
- 24: Feder
- 25: Vorderradgabel
- 26: Zangenbremse
- 27: Bremsbacken
- 28: Seilzug
- 29: Hebel
- 30: Lenker
- 31: Lasche
- 32: Bohrung
- 33: Aussparung
- 34: Schlitz
- 35: Unterrohr
- 36: Achse
- 37: Druckfeder
- 38: Bolzen
- 39: Langloch
- 40: Hebel

## Patentansprüche

1. Lastenfahrrad (2) mit Vorderradgepäckträger (5) und Stützräder (23) tragenden Fahrradstützen (19), bei dem der Vorderradgepäckträger (5) am Steuerkopfrohr (7) eines aus miteinander verbundenen Rohren aus Metall oder aus faserverstärkten Kunststoffen bestehenden Fahrradrahmens (1) über dem Vorderrad (4) befestigt ist, **dadurch gekennzeichnet,**
- **daß** der Vorderradgepäckträger (5) zwei Fahrradstützen (19) trägt, die sich einknickbar über ein jeweils in ihrem unteren Teil befindliches Scharniergelenk (20) mit einer Rastung (21) bis fast zum Boden (18) zu einer an ihren Enden Stützräder (23) tragenden Querachse (22) erstrecken,
- **daß** über die Scharniergelenke (20) eine Feder (24) gelegt ist, die nach Lösen der Rastung (21) die Querachse (22) mit den Stützrädern (23) vom Boden (18) abhebend zwischen den Fahrradrahmen (1) und das Vorderrad (4) zieht, und
- **daß** im Fahrradrahmen (1) ein im wesentlichen V-förmig geführtes Hauptrohr (6) von einem Steuerkopfrohr (7) abwärts, im Durchstiegsbereich im wesentlichen horizontal und dann aufwärts zu einer Sattelstützenaufnahme (8 ) verläuft, durch ein unteres Stützrohr (10) versteift ist, das den abwärts und den aufwärts führenden Teil des Hauptrohres (6) verbindet, und daß ein oberes Stützrohr (11) vom oberen Teil des Steuerkopfrohres (7) zum unteren Stützrohr (10) führt.

2. Lastenfahrrad (2) nach Anspruch 1, **dadurch gekennzeichnet, daß** eine durch Umschalten in zwei Stellungen eines außerhalb des normalen Griffbereichs des Fahrradfahrers am Lenker (30) des Lastenfahrrads (2) angebrachten Hebels (29) betätigbare, mit ihren Bremsbacken (27) auf die Seitenwänden des Reifens des Vorderrades (4) als Feststellbremse wirkende Zangenbremse (26) an einer Vorderradgabel (25) angebracht ist, und/oder daß die Zangenbremse (26) nur nach Einrasten der Rastung (21) betätigbar ist.

3. Lastenfahrrad (2) nach Anspruch 1, **dadurch gekennzeichnet, daß** die Rastung (21) im Scharniergelenk (20) aus einer in Langlöchern eines Unterrohrs (35) befindlichen Achse und dem in die Fahrradstütze (19) einschiebbaren Unterrohr (35) besteht.

4. Lastenfahrrad (2) nach Anspruch 1, **dadurch gekennzeichnet, daß** die Rastung (21) im Scharniergelenk (20) aus einer am Ende der Fahrradstütze (19) befindlichen halbkreisförmigen Lasche (31) mit einer Bohrung (32) besteht, die am Scheitel des Halbkreises eine Aussparung (33) trägt, in die ein im Unterrohr (35) befindlicher, auf einer Druckfeder (37) gelagerter, mit einem Hebel (29) lösbarer Bolzen (38) eingreift, sobald das Unterrohr (35) mit der Fahrradstütze (19) fluchtet.

5. Lastenfahrrad (2) nach Anspruch 1, **dadurch gekennzeichnet, daß** im Fahrradrahmen (1) der untere Teil des Hauptrohres (6) in einer Höhe verläuft, die zwischen Tretlagergehäuse (9) und unterem Totpunkt des Tretkurbeltriebes liegt.

6. Lastenfahrrad (2) nach Anspruch 1, **dadurch gekennzeichnet, daß** das Tretlagergehäuse (9) am Hauptrohr (6) angeschweißt ist und/oder daß diese Verbindung durch Stegbleche (12) verstärkt ist, die sowohl am Hauptrohr (6) als auch am Tretlagergehäuse (9) und an Hinterbaustreben (15') befestigt sind.

7. Lastenfahrrad (2) nach Anspruch 1, **dadurch gekennzeichnet, daß** Hinterbaustreben (15) am Tretlagergehäuse (9) und unterhalb der Sattelstützenaufnahme (8) des Hauptrohres (6) münden.

8. Lastenfahrrad (2) nach Anspruch 6 order 7, **dadurch gekennzeichnet, daß** die Hinterbaustreben (15) sowohl unten als auch oben am Hauptrohr (6) münden.

9. Lastenfahrrad (2) nach Anspruch 7, **dadurch gekennzeichnet, daß** eine dritte Hinterbaustrebe (16) aufjeder Seite des Hinterrads (13) befestigt ist, die in der Nähe der Ausfall-Enden (14) einerseits und in der Nähe der Befestigung des unteren Stützrohres (10) andererseits im Hauptrohr (6) mündet.

10. Lastenfahrrad (2) nach Anspruch 1, **dadurch gekennzeichnet, daß** das im Steuerkopfrohr (7) gelagerte Schaftrohr der vorderen Gabel eine im wesentlichen zylindrische Außenkontur aufweist und daß die Wandstärke des Schaftrohrs stetig und ohne Steifigkeitssprünge von unten nach oben hin abnimmt.

## Claims

1. Transport bicycle (2) with front luggage carrier (5) and stands (19) carrying support wheels (23) where front luggage carrier (5) is mounted over front wheel (4) to head tube (7) of a bicycle frame (1) consisting of tubes connected with one another and made of metal or fibre-reinforced plastics, **characterised by**
- front luggage carrier (5) carrying two stands (19) which are collapsible and extend through a hinge (20) located in each of their lower parts and provided with a catch (21) almost down to floor (18) to a transverse axle (22) carrying support wheels (23) at its ends;
- a spring (24) applied across hinges (20) and, after releasing catch (21), lifting off floor (18) transverse axle (22) together with support wheels (23) and pulling it between bicycle frame (1) and front wheel (4), and
- a fundamentally V-shaped main tube (6) running in bicycle frame (1) from a head tube (7) downward, fundamentally in horizontal direction in the passage area, and then upward to a seat pillar receptacle (8) and being reinforced by a lower strut tube (10) which connects the downward and upward parts of main tube (6), and by an upper strut tube (11) leading from the upper part of head tube (7) to lower strut tube (10).

2. Transport bicycle (2) according to Claim 1, **characterised by** a cantilever brake (26) which can be actuated by changing between two positions a brake handle (29) attached to handlebar (30) of transport bicycle (2) out of the normal reach of the cyclist and which acts on the sides of the tyre of front wheel (4) as a parking brake by its brake blocks (27) and which is mounted to a front fork (25), and/or by cantilever brake (26) being ready for actuation only after catch (21) has locked in.

3. Transport bicycle (2) according to Claim 1, **characterised by** catch (21) in hinge (20) consisting of an axle located in oblong holes of a down tube (35) and of down tube (35) which can be retracted into stand (19).

4. Transport bicycle (2) according to Claim 1, **characterised by** catch (21) in hinge (20) consisting of a semicircular bracket (31) located at the end of stand (19) and provided with a hole (32) and with a recess (33) at the peak of the semicircle into which a pin (38) unlockable by a lever (29) and sitting on a compression spring (37) engages, once down tube (35) is in alignment with stand (19).

5. Transport bicycle (2) according to Claim 1, **characterised by** the lower part of main tube (6) running in bicycle frame (1) at a height which is between bottom bracket bearing housing (9) and the upper dead centre of the pedals and bottom bracket bearing assembly.

6. Transport bicycle (2) according to Claim 1, **characterised by** bottom bracket bearing housing (9) being welded to main tube (6) and/or by this conncetion being reinforced by webs (12) attached to both main tube (6) and bottom bracket bearing housing (9) and to rear structure struts (15).

7. Transport bicycle (2) according to Claim 1, **characterised by** rear structure struts (15) ending at bottom bracket bearing housing (9) and below seat pillar receptacle (8) of main tube (6).

8. Transport bicycle (2) according to Claim 6 or 7, **characterised by** rear structure struts (15) ending at both the bottom and the top of main pipe (6).

9. Transport bicycle (2) according to Claim 7, **characterised by** a third rear structure strut (16) being mounted to either side of back structure (13) and ending in main tube (6) near frame rear ends (14), on the one hand, and near the fixing point of lower strut tube (10), on the other hand.

10. Transport bicycle (2) according to Claim 1, **characterised by** the front fork shank tube which sits in head tube (7) showing a fundamentally cylindrical outer contour and by the wall thickness of the shank tube continuously tapering from bottom to top without any stiffness jumps.

## Revendications

1. Bicyclette de transport (2) avec porte-bagages avant (5) et supports de bicyclette (19) pourvus de roulettes d'appui (23), sur laquelle le porte-bagages avant (5) est fixé, au dessus de la roue avant (4), au tube tête de direction (7) d'un cadre de bicyclette (1) composé d'un assemblage de tubes en métal ou en matière synthétique renforcée de fibres, **caractérisé par le fait,**
- **que** le porte-bagages avant (5) est muni de deux supports de bicyclette (19) repliables moyennant une articulation (20) avec dispositif d'arrêt (21) située respectivement dans sa partie inférieure, descendant presque jusqu'au sol (18) jusqu'à un axe transversal (22) portant les roulettes d'appui (23),
- **qu'**un ressort (24) est disposé par dessus l'articulation (20), lequel , après déclenchement du dispositif d'arrêt (21), tire l'axe transversal (22) avec les roulettes d'appui (23) entre le cadre de bicyclette (1) et la roue avant (4) par soulèvement, et
- **que** dans le cadre de bicyclette (1) un tube principal (6) tenu dans l'essentiel en forme de vé allant vers le bas depuis le tube tête de direction (7), pour prendre une orientation pratiquement horizontale dans la partie enfourchement, puis remonter pour former le logement de support de selle (8), est rigidifié à l'aide d'un tube de renforcement inférieur (10) reliant les parties descendante et montante du tube principal (6), et que le tube de renforcement supérieur (11) va de la partie supérieure du tube tête de direction (7) jusqu'au tube de renforcement inférieur (10).

2. Bicyclette de transport (2) selon la demande 1, **caractérisée par le fait qu'**un frein à mâchoires (26), pouvant être actionné par commutation dans deux positions d'un levier (29) situé en dehors de la zone d'accès normale du cycliste, au guidon (30) de la bicyclette de transport (2), agissant avec ses mâchoires (27) sur les parois latérales du pneu de la roue avant (4) et faisant effet de frein de stationnement, est fixé à une fourche de roue avant (25) et/ou que le frein à mâchoires (26) ne peut être actionné qu'après enclenchement du dispositif d'arrêt (21)

3. Bicyclette de transport (2) selon la demande 1, **caractérisée par le fait que** le dispositif d'arrêt (21) dans l'articulation (20) se compose d'un axe se trouvant dans des trous oblongs d'un tube inférieur (35) et du tube inférieur (35) pouvant être introduit dans le support de bicyclette (19).

4. Bicyclette de transport (2) selon la demande 1, **caractérisée par le fait que** le dispositif d'arrêt (21) dans l'articulation (20) se compose d'une attache en forme de demi-cercle (31) présentant un alésage (32), se trouvant à l'extrémité du support de bicyclette (19), laquelle attache (31) porte une encoche (33) au sommet du demi-cercle, dans laquelle vient s'introduire un doigt (38), situé dans le tube inférieur (35), logé sur un ressort de compression (37), pouvant être actionné à l'aide d'un levier (29), dès que le tube inférieur (35) et le support de bicyclette (19) sont alignés l'un sur l'autre.

5. Bicyclette de transport (2) selon la demande 1, **caractérisée par le fait que**, dans le cadre de bicyclette (1), la partie inférieure du tube principal (6) passe à une hauteur située entre le carter de palier de pédalier (9) et le point mort bas du pédalier.

6. Bicyclette de transport (2) selon la demande 1, **caractérisée par le fait que** le carter de palier de pédalier (9) est soudé au tube principal (6) et/ou que cet assemblage est renforcé par des tôles de renforcement (12) solidaires tant du tube principal (6) que du carter de palier de pédalier (9) et à des tubes de fourche arrière (15).

7. Bicyclette de transport (2) selon la demande 1, **caractérisée par le fait que** des tubes de fourche arrière (15) aboutit, d'une part, au carter de palier de pédalier (9) et d'autre part, au tube principal (6), en dessous du logement de support de selle (8).

8. Bicyclette de transport (2) selon la demande 6 ou 7, **caractérisée par le fait que** les tubes de fourche arrière (15) aboutissent en bas comme en haut au tube principal (6).

9. Bicyclette de transport (2) selon la demande 7, **caractérisée par le fait qu'**un troisième tube de fourche arrière (16) est fixée de part et d'autre de la fourche (13), aboutissant dan le tube principal (6) d'une part à proximité des pattes de fourche arrière (14) et d'autre part à proximité de la fixation du tube de renforcement inférieur (10).

10. Bicyclette de transport (2) selon la demande 1, **caractérisée par le fait que** la queue de fourche avant logée dans le tube tête de direction (7) présente un contour extérieur essentiellement cylindrique et que l'épaisseur de paroi de ladite queue de fourche avant diminue sans cesse et sans saut de rigidité du bas vers le haut.
